# EUROPEAN PATENT SPECIFICATION

(11) **EP 2 940 950 B1**
(45) Date of publication and mention of the grant of the patent: **20.02.2019**
(21) Application number: 14305639.8
(22) Date of filing: 29.04.2014
(51) Int. Cl.: H04L 12/751, G06F 12/0862, G06F 12/0811, G06F 12/0897, G06F 12/08

(54) **Information centric networking (ICN) router**
Router für informationszentriertes Networking (ICN)
Routeur de réseautage centrique d'informations (ICN)

(43) Date of publication of application: 04.11.2015
(73) Proprietor: Institut Mines-Telecom, 75014 Paris (FR)
(72) Inventor: Rossi, Dario, 75015 Paris (FR); Rossini, Giuseppe, Cambridge CB4 3QX (GB); Leonardi, Emilio, 10141 Torino (IT); Garetto, Michele, 10122 Torino (IT)
(74) Representative: Nony

(56) References cited:
- US-A1- 2013 275 544
- D. PERINO; M. VARVELLO: "A reality check for content centric networking", ACM SIGCOMM ICN WORKSHOP, 2011, XP002730964,

## Description

### FIELD OF THE INVENTION

The field of this invention is that of Information Centric Networking (ICN).

More particularly, the invention relates to an ICN router.

### BACKGROUND OF THE INVENTION

Information Centric Networking (ICN), is an alternative approach to the architecture of computer networks. Its founding principle is that a communication network should allow a user to focus on the needed data, rather than having to reference a specific, physical location where that data is to be retrieved from. This stems from the fact that the vast majority of current Internet usage (90%) consists of data being disseminated from a source to a number of users.

ICN has introduced a new networking model, where the communication is centered on named-data rather than host address. Indeed, in ICN every data packet is identified, addressed and retrieved by its unique name instead of its physical location.

Among the several ICN architectures that have been proposed in recent years, the best known example is represented by the Content Centric Networking (CCN), also known as Named Data Networking (NDN). While ICN architectures generally differ in a number of choices (e.g., flat vs hierarchical naming strategy, routing and forwarding strategies, granularity of minimum addressable entity, etc.), they however generally have common points -- such as featuring caching functionalities as primitive in the architecture. Since a common terminology that encompasses all ICN proposals is currently missing, in this context we adopt the CCN lingo for the sake of clarity, but we point out that our approach is applicable to a greater extent.

Thus, in ICN all network nodes (routers) potentially store a content (which is split in "chunks", i.e. elementary fragments of data with a given size, in other words "blocks") that they forward to serve future requests for the same content. Therefore, it is possible to equip network nodes with enhanced storage capabilities such as caches/buffer memories. Indeed, storage resources can be used to maintain temporary content replicas spread through the network for a period of time ranging from minutes to hours or days. The availability of different replicas depends on several factors, such as content popularity, cache replacement policies, and is impacted by the request forwarding policy. The term "request forwarding policy" refers here broadly and as non-limitative, to ways/rules to manage the forwarding of a content request within a network comprising nodes. In fact, request forwarding policy plays an important role in providing better end-users performance (ex: data delivery time) and reducing the amount of data transferred in a network, i.e. providing a lower network load.

In practice, the success of ICN architectures depends on their ability to provide large caches, able to process data traffic at line speed. It has been pointed out that these two requirements tradeoff: due to technological limits of currently available memory technologies, state-of-the-art sizes to about 10GB the largest cache size that can sustain over 10Gbps speeds.

Notably, two main performance aspects need to be considered for ICN caches. First (i), ICN routers perform lookup on the content names, in order to decide whether an interest can be satisfied locally by cached content, or whether it needs to be forwarded. In case of a match, (ii) the lookup returns a pointer to the memory region storing the content itself, that needs to be transferred to assemble a response packet.

Operation (i) requires to move small amount of data, and its main performance indicator is thus the memory access latency. In order to sustain line rate operations, the memory index must be accessed at a frequency that in the worst case matches the throughput of the maximum sustainable data rate. In other words, assume that the aggregate router data rate is R, that data chunks have size Sc (generally a few kB), then the maximum number of chunks that can be transferred in the time unit is R/Sc, that also upperbounds the number of accesses to the index, so that taccess ≤ 1R/Sc.

Operation (ii), instead, depends on the chunk size, and can be either driven by access latency (in case of small chunks) or by the external data rate, i.e. the sustainable throughput when reading random memory blocks (in case of large chunks).

In the document "A reality check for content centric networking", by D. Perino and M. Varvello (in ACM SIGCOMM ICN workshop, 2011), XP002730964, a state-of-the-art core ICN router is designed to support 8x40Gbps interfaces serving SC=1500B chunks, stored on a 10GB DRAM ("Dynamic Random Access Memory") cache implementing sequential access and LRU replacement policy, indexed on a 100MB SRAM ("Static Random Access Memory") chip by employing H=40bits long content names hashes.

However such a memory size appears insignificant with respect the digital data consumed worldwide, and ICN success is conditioned to the feasibility of large content stores. As such, it would be desirable to include technologies such as SSD "Solid State Drive" (or even HDD "Hard-Disk Drive") to scale up the cache size up to some TB. Even if the document "A reality check for content centric networking" proposes an edge router design where a 1TB SSD cache is indexed by a 10GB DRAM chip, such design is not usable for core ICN routers, as the high memory access latency of SSD (at least 30µs) bottlenecks operations (i) and (ii) on the memory: a maximum (and insufficient) speed of 0.5Gbps is reported.

US 2013/275544 A1 discloses an Information centric networking router comprising a hierarchical cache. Therefore, there is a need for a simple yet inexpensive and effective architecture that scales up ICN caches to multi-Terabyte size while maintaining multi-Gbps line-speed operation.

### SUMMARY OF THE INVENTION

The invention relates to an Information Centric Networking router, a method, a computer program product and a computer readable medium as mentioned in the claims.

### DETAILED DESCRIPTION

### ICN caches

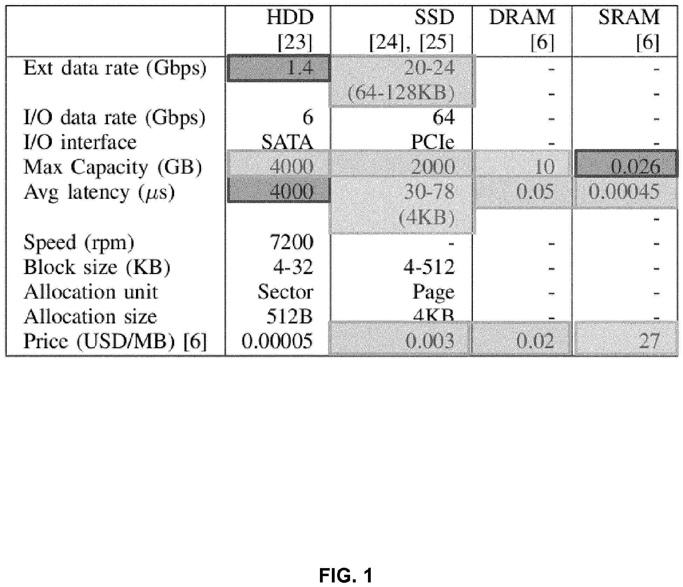

Referring to **figure 1****,** characteristics of known memory technologies are illustrated. For each technology, strengths and weaknesses have been respectively highlighted with green and red colors.

From figure 1 it is to be noticed that a relatively larger memory read size (64KB-128KB) would allow to achieve high SSD memory throughput (20Gbps-24Gbps). HDD technology is instead not so appealing due to limits on both the achievable data rate (1.4Gbps), and the maximum data rate of the SATA interconnection (6Gpbs).

Hence, it may be argued that a system design moving SSD bottleneck from memory access time to external transfer rate could possibly gain over an order of magnitude in terms of the sustainable rate (up to 40x-48x). Additionally, given large SSD size, favorable performance in terms of caching should be expected as well.

### Router architecture

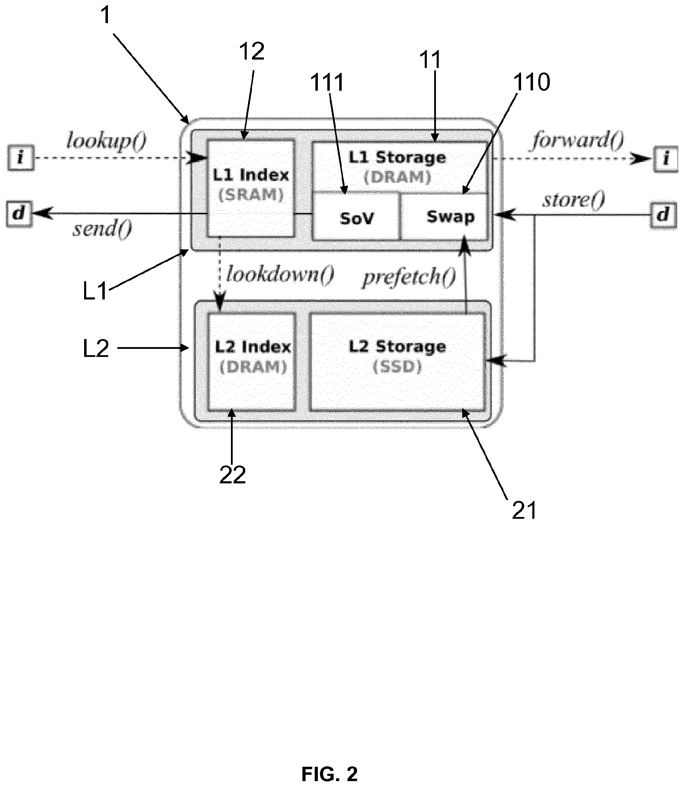

Referring to the **figure 2****,** the invention proposes an ICN router 1 introducing a multi-layer hierarchical caching system exploiting the intrinsic differences of heterogeneous memory technologies.

The router 1 comprising a first cache layer L1 and a second cache layer L2, the first cache layer L1 comprising a first content memory 11 and the second cache layer L2 comprising a second content memory 21, the second content memory 21 having a higher capacity but a slower access speed than the first content memory 11.

The router 1 is configured so that the first cache layer L1 is adapted to fetch data from second cache layer L2 when the router 1 is requested to output said data. In other words, the system is organized as a hierarchy of caches: a (multi-Terabyte) L2 cache masked behind a small L1 cache able to operate at (multi-Gbps) line rate. The idea is that L1 should contain chunks of ongoing videos for fast service in the data plane. Conversely, L2 is large but slow, so it can store a significant portion of the catalog, that it needs however to opportunely prefetch to L1.

To this end, the first content memory 11 presents a first block size and the second content memory 21 presents a second block size, the second block size being higher that the first block size (and in particular being a multiple of the first block size). Optimal block sizes will be given later.

The first content memory 11 comprises a "swap area" 110 through which the first content memory 11 is connected to the second content memory 21. The swap area 110 is adapted for individually serving blocks at the first block size as parts of blocks at the second size fetched from the second content memory 21. Blocks at the second size are thus treated by the swap area 110 as a batch of blocks at the first size.

In other words, the swap area 110 is adapted for outputting at the first block size data fetched from the second content memory 21 at the second block size. For example, if the first block size is 4kB and the second block size is 64 kB, the swap area 110 converts a 64kB-block from the second content memory 21 into sixteen 4kB-blocks of the first content memory 11. In ICN, objects are split in multiple named chunks, so that a request for a named chunk can be used as predictor of subsequent requests for other chunks belonging to the same object. This suggests to proactively trigger prefetching operations, operating over batches of chunks, so as to sustain high transfer throughput at L2. More precisely, the first size can be chosen as the chunk size, and therefore a block at the second size is a batch of consecutive chunks

Thus, the first (small but fast) cache L1 serves small blocks individually, whereas multiple small blocks are moved from the second (large but slow) cache L2 to the swap area 110 of the first content memory 11. This circumvent latency problems in accessing small blocks in the second cache L2, whereby accessing larger blocks (storing a batch of multiple small blocks) implies achieving high memory transfer rates while avoiding per-block latency penalty at the same time.

To sum up, providing the L1 with batches of chunks allows the L1 to serves theses chunks one by one at maximum speed, further circumventing the L2 performance limitations when chunks are treated individually by operating on batches of chunks at L2.

In a preferred embodiment using current storage technologies of Figure 1, the first content memory 11 is a Dynamic Random Access Memory (DRAM), and the second content memory 21 is a Solid-State Drive (SSD). Currently available off-the-shelf technologies allows a first content memory 11 with a capacity comprised between 2 GB and 20 GB (preferably about 10 GB), and a second content memory 21 with a capacity comprised between 2 TB and 20 TB (preferably about 10 TB). Notice that the DRAM memory is the only one able to sustain and satisfy data requests at line rate; proactive memory transfer from SSD to DRAM swap area 110, possible due to correlation of arrival requests in the data plane, ensures that the whole cache hierarchy can sustain and satisfy data requests at line rate as well.

As already explained, the chunk size (i.e. the first block size) is the minimum data object granularity. Small chunk sizes are preferable (e.g., to avoid paying a padding penalty for a myriad of small objects). Clearly, as the chunk size determines the frequency of all system operations, a larger chunk size is also beneficial as it relaxes the system complexity. Currently ongoing effort already employs larger chunk sizes of about 4kB, so that we consider chunk sizes between 2 kB and 20 kB, preferably 10 kB, to be a reasonable compromise. Yet, efficient memory transfers require larger read/write size, so that it is necessary to batch B chunks in order to achieve a batch size that allows sustaining high external data rates. As SSD achieves 20-24Gbps in random read of 64-128KB from figure 1, it is safe to have a second block size is comprised between 64 kB and 128 kB, i.e. to set B comprised between 8 and 32 chunks, preferably B = 10 chunks, in other words to have a second block size of 100 kB.

Thus, the router 1 is designed so that the L2 external data rate is the bottleneck. It is also to be noticed that the PCIe bus supports IO data rates up to 64Gbps, so that it is possible to use multiple parallel SSD for an additional gain.

### Indexes

Advantageously, the first cache layer L1 further comprises a first index memory 12 indexing blocks of the first content memory 11, and the second cache layer L2 further comprises a second index memory 22 indexing blocks of the second content memory 21. Cache indexes are accessed at each name lookup in the data-plane: whenever an interest packet hits the router, if the name is present in the index, the index contains the memory location of the corresponding named data in the storage memory.

Thus, at each level caches are organized into a classical (index, storage) pair. It is wishable for the first index memory 12 to be faster than the first content memory 11, and similarly for the second index memory 22 to be faster than the first content memory 21. At the same time, since memory indexes only have to store pointers to locations in the content memory where objects are located, it follows that indexes memories 12 and 22 are of much smaller size with respect to content memories 11 and 21 respectively.

Consequently, in the preferred embodiment of the present ICN router (as represented in figure 2), at L1 a SRAM chip indexes a DRAM cache, while at L2 a DRAM chip indexes an SSD cache.

Currently available off-the-shelf technologies allows a first index memory 12 with a capacity comprised between 20 MB and 200 MB (preferably about 100 MB), and a second index memory 22 with a capacity comprised between 2 GB and 20 GB (preferably about 10 GB).

### Third layer

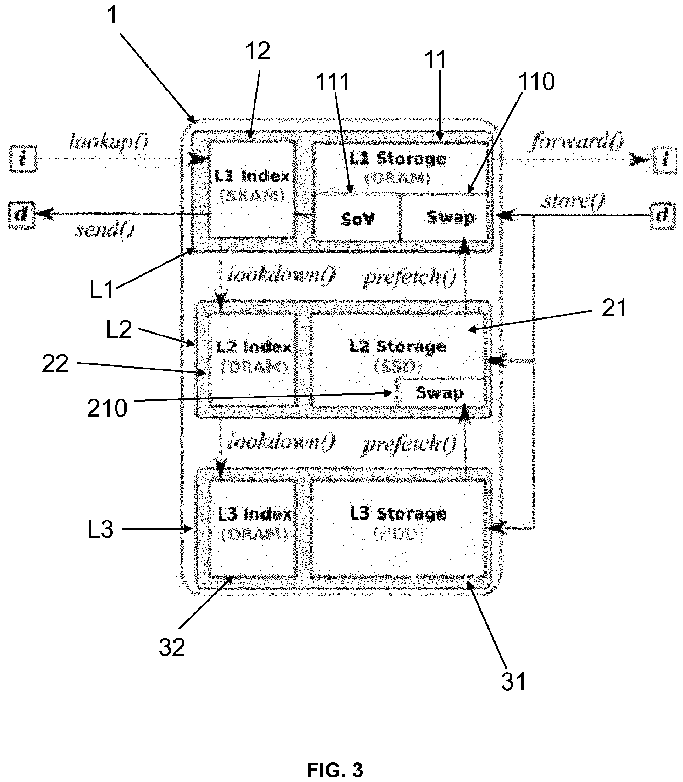

As represented in **figure 3****,** the router 1 may even comprise a third cache layer L3 comprising a mass memory 31 (for example a HDD) having a higher capacity but a slower access speed than the second content memory 21, the router 1 being configured so that the second cache layer L2 is adapted to fetch data from third cache layer L3 when the router 1 is requested to output said data. This mass memory 31 can be provided with a third index memory (for example another DRAM)

This L3 could be useful for increasing the size of L2 in an inexpensive way. A third bloc size (superior to the second block size) may be used for the mass memory 31. This would also require to manage part of the second content memory 21 as a second swap area 210 that temporarily stores content of the mass memory 31, and which is adapted for individually serving blocks at the second block size as parts of blocks at the third size fetched from the mass memory 21.

### Start of Video Area

The ICN architecture is particularly useful when requested contents are videos. Nowadays Internet streaming is dominated by portals such as YouTube, Kankan, Hulu, etc. In terms of networking, video traffic can be specified by the (average) streaming rate that the network needs to sustain in order to avoid stutter in the playback.

The streaming rate depends, on the one hand, on technological limitations of the physical display, and, on the other hand, on the availability of content encoded at that resolution. Despite physical resolution steadily increases (e.g., 4K displays were recently shown), such extremely high definition content is not readily available in the consumer market.

As such, most of the freely available Internet content is generally streamed at a much lower rate. For instance, the default video resolution of popular free services such as YouTube is 640x360, is encoded with H264 at a median rate of 500Kbps, according to measurements. Even popular paying services such as Netflix, offer only a minor part of their content at HD (1280x720, 5Mbps) or FHD quality (1920x1080, 7Mbps). Consequently, the size of an average streamed video is between 10 MB (low quality) and 100 MB (high quality), i.e. between 1,000 and 10,000 chunks.

The present ICN router 1 propose to further optimize for ICN specificities by providing in the first content memory a start-of-video (SoV) area 111 wherein is stored at least the first block of a plurality of contents stored in the second content memory 21. More precisely, the contents having at least their first block stored in the start-of-view area 111 are the contents of the second content memory 21 which are the likeliest to be requested, i.e. the popular videos. Each of the swap area 110, the SoV area 111 and the second content memory 21 may be managed according to a Least Recently Used (LRU) replacement policy.

For a catalog size of 500,000,000 videos following an assigned popularity law (usually Zipf), a subset of around 500,000 videos would constitutes 65% of requests. Thus, having the first chunk of these 500,000 videos stored into the start-of-video area 111 would allow any request for one of these videos to be instantaneously treated by serving this first chunk to the requesting user, while initiating transfer from the L2 to the L1 of the rest of the video through the swap area 110.

Observe that: (i) SoV 111 relates to properties of the catalog, whereas Swap size reflects the maximum number of active flows; (ii) Swap area 110 must be sufficiently large to guarantee that prefetched chunks are not evicted before a time lapse equal to the watching time of a batch (i.e., 1.6s when streaming rate = 500Kbps, and 160ms when streaming rate = 5Mbps).

Considering for simplicity an equal partitioning of the first content memory 11 between SoV area 111 and Swap area 110, with a size of 10 GB, both areas are 5GB worth of cache space. So the SoV area 111 could keep the first chunk for 500,000 videos (at a first block size of 10 kB), while the Swap area 110 allows for 50,000 concurrent flows (at a second block size of 100 kB), thus, potentially sustaining up to 20-24Gbps of aggregate streaming.

It is to be noticed that these figures refer to the case in which all remaining chunks requested by users are retrieved from the L2 cache, and thus temporarily placed in the Swap area 110. This is, indeed, the worst case for the Swap sizing.

We emphasize that, considering an average video size of 10 MB, about 5 TB of second content memory 21 would be needed to keep the top 500,000 videos of the nowadays YouTube catalog.

Since we expect caching performance to be mainly driven by L2 size, when routers operate at a data rate slower than 20-24 Gbps, it also makes sense to consider a smaller L1 DRAM cache 11, as this translates into cost reduction (mainly as L1 SRAM index 12 shrinks) that could compensate, if not entirely cover, the additional SSD cost. For example, 1 GB of Swap area 110 would correspond to the minimum size needed to sustain a data rate of 4-4.5 Gbps. A 1 GB of SoV area 111, instead, would be able to store initial chunks for 100,000 top videos, responsible for over 58% of the requests.

### Request for a content

Let us denote with ci the i-th chunk of object m in a catalog comprising M movies. Consider all chunks to have equal size Sc, for example 10 kB (possibly using padding for, e.g., the last chunk of an object). Requests for the first chunk c1 of the object m can be assumed to be independent of previous chunk requests, whereas requests for subsequent chunks ci (i > 1) of the same object are highly correlated in time: in the case of video, it can be loosely assumed chunks to be separated by a gap related to the streaming rate.

Whenever an interest for the first chunk c1 hits the ICN router 1, a lookup() is issued to the first content memory 11 first: in case of a hit in the SoV area 111 (i) a frame containing c1 data is assembled and returned via send(); (ii) the system signals the second content memory 21 to prefetch() a batch of B consecutive chunks (i.e. a block of the second block size) to the Swap area 110 (and the first index memory 12 is updated accordingly).

Therefore, video chunks move from L2 to L1 and update the L1 index 12 before the corresponding requests effectively hits the cache.

In case of a L1 miss for c1 (i.e. the first chunk is not present in the SoV area 111), content search continues both (i) in the L2 within the ICN router 1 via a lookdown() (in the second index memory 22) and/or (ii) in the router vicinity via interest forward(). Operations (i)-(ii) can be performed in parallel (to optimize user delay) or in sequence (to save network traffic). Sequential operations trigger network traffic only in case of a L2 miss, but add in this case a delay proportional to the lookdown() time in the L2 index 12. Parallel operations avoid this delay but possibly generate unnecessary network traffic in the case of a L2 hit.

Parallel operations are preferable as they lead to better user experience, and since the overhead is limited to the first chunk of an object (according to the example values, 10KB of a 10MB video corresponds to a 0.1% overhead). Moreover, parallel operations can also simplify system implementation, as this avoids the need to maintain timers (for retransmission over the alternative path) and any further state.

Pushing the decoupling of L1 and L2 further, in principle it would be more efficient to let the SoV area 111 and the second content memory 21 store completely disjoint chunk sets. Otherwise stated, from caching purposes, it would be useless to store a redundant copy of the first chunk in both L1 and L2, since the latter will never be used.

However, as the second content memory 11 is much larger than the first content memory 11 and especially persistent, this slight redundancy allows the system to easily recover after a failure, and promptly re-initialize the SoV area 111 by transferring the first chunk of the most popular objects.

After having consumed the first chunk, the user will start requesting subsequent chunks. Due to prefetching, chunks c2...cB are now to be found in the first content memory 11, so that whenever a request for chunk cB+1 arrives, the system can proactively lookdown for cB+1...c2B. In CCN terms, since the last portion of a chunk name represents the chunk sequence number, this is easy to do since upon reception of chunk ck the lookdown() decision requires checking a simple modulus division k%B = B - 1.

### Optimization

This behavior holds as long as the user does not jump ahead in time, breaking the sequential view mode. While we expect sequential behavior to be vastly predominant, still we recognize that users increasingly depend on added value-services such as advanced VCR functionalities allowing them to pause, rewind or fast-forward, possibly generating non-sequential chunk request patterns.

Additional system optimization, while non-necessary for the correct operation, can provide benefits by pushing a moderate complexity to the edge of the ICN network:
- *Pause*: In case the pause time is long enough (i.e., larger than Swap area 110 characteristic time, which is the time since the last request after which an object m will be evicted from the first content memory 11), content will disappear. Thus, when the user restarts, typically the first interest packet sent by the user for the next chunk not yet on the user buffer will be propagated upstream. To increase the efficiency of the system, prefetching should extend to the user cache. When a user pauses a video, the decoder automatically goes on retrieving a few extra chunks before suspending the download. Such extra chunks are stored locally in the playout buffer of the user, and thus they are already available when the user wants to watch beyond the point of the suspension. As soon as playback resumes, the player should proactively send an interest for the next chunk not yet on the user buffer: this allows the system to restart the prefetching mechanism, transferring chunks from the slow cache to the swap area in the usual way. As a side note, as the content is very likely stored on L2, the player can avoid an unnecessary lookup to propagate beyond the first ICN router by limiting the scope (e.g., setting a low TTL) for the first interest after a pause (and only in case the scoped interest has failed to hit content in L2, after a time-out the user will send a new interest packet with unlimited TTL).
- *Fast-forward*: In case of forward jumps larger than B times the playing duration of a chunk, the request for the new chunk will generate a L1 cache miss (in other words, the required chunk is in another block from the second content memory), and operations occur as previously explained for the first chunk c1. Yet, as the playback is not paused, nothing can prevent a small buffering delay in this case.
- *Rewind*: This can be completely masked by the user cache: as previous chunks have already been played, they are still available in the user device, so no specific action is needed.

### Method

According to a second aspect, the invention proposes a method for accessing content at an ICN router 1.

The method starts with a step (a) of receiving at the router 1 a request for a content at least partially stored in a second content memory 21 of second cache layer L2 of the router 1, the second content memory 21 presenting a second block size. This step (a) further comprises searching for a first block of the requested content in a start-of-video area 111 of the first content memory 11, which is likely to contain it if the content is a popular video.

In a second step (b), if the first block has been found in the SoV area 111, it is served in response to the request. Simultaneously, as explained blocks at the second block size of data of said requested content are fetched from the second content memory 21 at a swap area 110 of a first content memory 11 of a first cache layer L1 of the router 1, the first content memory 11 presenting a first block size. As already explained, if a block at the first size is a chunk, a block at the second size is a batch of chunks.

For each fetched block at the second block size, the chunks which this block comprises are individually and sequentially serving, in response to the request, in a step (c).

Finally, a new block at the second block size is prefetched from the second content memory and copied to the swap area of the first content memory upon reception of a content request for the penultimate chunk of the batch (i.e., chunk of index k satistiying k%B = B - 1).

When the content id a video, may be performed the "optimization" previously detailed. The method may thus comprise a step (d) of, when receiving at the router 1 a request for pausing the serving of the video (i.e. the user "pauses" the playing of the video), further sequentially serving at least one block at the first block size (so as to store extra chunks locally in the playout buffer of the user), and when receiving at the router 1 a request for resuming the serving of the video, performing steps (b) and (c) from the last block served (i.e. resuming fetching of batches of chunks from the second content memory 21). As the chunks stored in the user's buffer are already available, no delay will affect the user.

## Claims

1. An Information Centric Networking router (1), comprising a first cache layer (L1) and a second cache layer (L2), the first cache layer (L1) comprising a first content memory (11) and the second cache layer (L2) comprising a second content memory (21), the second content memory (21) having a higher capacity but a slower access speed than the first content memory (11), the router (1) being configured so that the first cache layer (L1) is adapted to fetch data from second cache layer (L2) when the router (1) is requested to output said data,
**characterized in that** the first content memory (11) presents a first block size and the second content memory (21) presents a second block size, the second block size being higher that the first block size, the first content memory (11) comprising a swap area (110) through which the first content memory (11) is connected to the second content memory (21), the swap area (110) being adapted for sequentially serving blocks at the first block size as parts of blocks fetched at the second size from the second content memory (21) in response to the request.

2. A router according to claim 1, wherein the first cache layer (L1) further comprises a first index memory (12) indexing blocks of the first content memory (11), and the second cache layer (L2) further comprises a second index memory (22) indexing blocks of the second content memory (21).

3. A router according to claim 2, wherein the first content memory (11) has a higher capacity but a slower access speed than the first index memory (12), and the second content memory (21) has a higher capacity but a slower access speed than the second index memory (22).

4. A router according to any one of claims 1 to 3, further comprising a third cache layer (L3) comprising a mass memory (31) having a higher capacity but a slower access speed than the second content memory (21), the router (1) being configured so that the second cache layer (L2) is adapted to fetch data from third cache layer (L3) when the router (1) is requested to output said data.

5. A router according to any one of claims 1 to 4, wherein the first content memory (11) further comprising a start-of-video area (111) wherein is stored at least the first block of a plurality of contents stored in the second content memory (21).

6. A router according to claim 5, wherein the contents having at least their first block stored in the start-of-video area (111) are the contents of the second content memory (21) which are the likeliest to be requested.

7. A method for accessing content at an Information Centric Networking router (1), comprising the steps of:
(a) receiving at the router (1) a request for a content at least partially stored in a second content memory (21) of second cache layer (L2) of the router (1), the second content memory (21) presenting a second block size;
**characterised in that** if further comprises the steps of:
(b) at a swap area (110) of a first content memory (11) of a first cache layer (L1) of the router (1), the first content memory (11) presenting a first block size, fetching blocks at the second block size of data of said requested content from the second content memory (21);
(c) for each fetched block at the second block size fetched, sequentially serving, in response to the request, blocks at the first block size as parts of the fetched block at the second block size.

8. A method according to claim 7, wherein the step (a) further comprises searching for a first block of the requested content in a start-of-video area (111) of the first content memory (11).

9. A method according to claim 8, wherein at least the first block of the requested content is stored in the start-of-video area (111), the step (b) simultaneously comprising sequentially serving in response to the request blocks of the requested content which are stored in a start-of-video area (111).

10. A method according to any one of claims 7 to 9, wherein the requested content is a video to be played, comprising a step (d) of, when receiving at the router (1) a request for pausing the serving of the video, further sequentially serving at least one block at the first block size, and when receiving at the router (1) a request for resuming the serving of the video, performing again steps (b) and (c) from the last block served.

11. A computer program product, comprising code instructions for executing a method according to claims 7-10 for accessing content at an ICN Information Centric Networking router (1) according to any one of claims 1 to 6.

12. A computer-readable medium, on which is stored a computer program product according to claim 11.

## Patentansprüche

1. Router (1) für informationszentriertes Networking, aufweisend eine erste Cache-Schicht (L1) und eine zweite Cache-Schicht (L2), wobei die erste Cache-Schicht (L1) einen ersten Inhaltsspeicher (11) aufweist und die zweite Cache-Schicht (L2) einen zweiten Inhaltsspeicher (21) aufweist, wobei der zweite Inhaltsspeicher (21) eine höhere Kapazität, jedoch eine niedrigere Zugriffsgeschwindigkeit als der erste Informationsspeicher (11) aufweist, wobei der Router (1) derart konfiguriert ist, dass die erste Cache-Schicht (L1) zum Abholen von Daten aus der zweiten Cache-Schicht (L2) geeignet ist, wenn der Router (1) zum Ausgeben der Daten angefordert wird,
**dadurch gekennzeichnet, dass** der erste Inhaltsspeicher (11) eine erste Blockgröße aufweist und der zweite Inhaltsspeicher (21) eine zweite Blockgröße aufweist, wobei die zweite Blockgröße höher als die erste Blockgröße ist, wobei der erste Inhaltsspeicher (11) einen Auslagerungsbereich (110), über den der erste Inhaltsspeicher (11) mit dem zweiten Inhaltsspeicher (21) verbunden ist, wobei der Auslagerungsbereich (110) zum sequentiellen Zuführen von Blöcken auf der ersten Größe als Teile von Blöcken, die auf der zweiten Blockgröße in Reaktion auf die Anforderung aus dem zweiten Inhaltsspeicher (21) abgeholt werden, geeignet ist.

2. Router nach Anspruch 1, wobei die erste Cache-Schicht (L1) ferner einen ersten Indexspeicher (12) aufweist, der Blöcke des ersten Inhaltsspeichers (11) indiziert, und die zweite Cache-Schicht (L2) ferner einen zweiten Indexspeicher (22) aufweist, der Blöcke des zweiten Inhaltsspeichers (21) indiziert.

3. Router nach Anspruch 2, wobei der erste Inhaltsspeicher (11) eine höhere Kapazität, jedoch eine niedrigere Zugriffsgeschwindigkeit als der erste Indexspeicher (12) aufweist, und wobei der zweite Inhaltsspeicher (21) eine höhere Kapazität, jedoch eine niedrigere Zugriffsgeschwindigkeit als der zweite Indexspeicher (22) aufweist.

4. Router nach einem der Ansprüche 1 bis 3, ferner aufweisend eine dritte Cache-Schicht (L3), der einen Massenspeicher (31) mit einer höheren Kapazität, jedoch einer niedrigeren Zugriffsgeschwindigkeit als der zweite Inhaltsspeicher (21) aufweist, wobei der Router (1) derart konfiguriert ist, dass die zweite Cache-Schicht (L2) zum Abholen von Daten aus der dritten Cache-Schicht (L3) geeignet ist, wenn der Router (1) zum Ausgeben der Daten angefordert wird.

5. Router nach einem der Ansprüche 1 bis 4, wobei der erste Inhaltsspeicher (11) ferner einen Videoanfangsbereich (111) aufweist, in dem mindestens der erste Block von mehreren Inhalten gespeichert ist, die im zweiten Inhaltsspeicher (21) gespeichert sind.

6. Router nach Anspruch 5, wobei die Inhalte, deren mindestens erster Block im Videoanfangsbereich (111) gespeichert ist, die Inhalte des zweiten Inhaltsspeichers (21) sind, bei denen es am wahrscheinlichsten ist, dass sie angefordert werden.

7. Verfahren zum Zugreifen auf Inhalt in einem Router (1) für informationszentriertes Networking, die folgenden Schritte aufweisend:
a) Empfangen am Router (1) einer Anforderung nach einem Inhalt, der mindestens teilweise in einem zweiten Inhaltsspeicher (21) einer zweiten Cache-Schicht (L2) des Routers (1) gespeichert ist, wobei der zweite Inhaltsspeicher (21) eine zweite Blockgröße aufweist; **dadurch gekennzeichnet, dass** es ferner die folgenden Schritte aufweist:
b) in einem Auslagerungsbereich (110) eines ersten Inhaltsspeichers (11) einer ersten Cache-Schicht (L1) des Routers (1), wobei der erste Inhaltsspeicher (11) eine erste Blockgröße aufweist, Abholen von Blöcken auf der zweiten Blockgröße von Daten des angeforderten Inhalts aus dem zweiten Inhaltsspeicher (21);
c) für jeden abgeholten Block auf der abgeholten zweiten Blockgröße, sequentielles Zuführen, in Reaktion auf die Anforderung, von Blöcken auf der ersten Blockgröße als Teile des abgeholten Blocks auf der zweiten Blockgröße.

8. Verfahren nach Anspruch 7, wobei der Schritt a) ferner das Suchen nach einem ersten Block des angeforderten Inhalts in einem Videoanfangsbereich (111) des ersten Inhaltsspeichers (11) aufweist.

9. Verfahren nach Anspruch 8, wobei mindestens der erste Block des angeforderten Inhalts im Videoanfangsbereich (111) gespeichert ist, wobei der Schritt b) simultan das sequentielle Zuführen, in Reaktion auf die Anforderung, von Blöcken des angeforderten Inhalts, die im Videoanfangsbereich (111) gespeichert sind, aufweist.

10. Verfahren nach einem der Ansprüche 7 bis 9, wobei der angeforderte Inhalt ein Video ist, das abgespielt werden soll, aufweisend einen Schritt d) des, wenn eine Anforderung zum Pausieren des Zuführens des Videos am Router (1) empfangen wird, weiteren sequentiellen Zuführens von mindestens einem Block auf der ersten Blockgröße, und wenn eine Anforderung zum Wiederaufnehmen des Zuführens des Videos am Router (1) empfangen wird, des erneuten Ausführens von Schritt b) und c) ab dem letzten zugeführten Block.

11. Computerprogrammprodukt, aufweisend Codeanweisungen zum Ausführen eines Verfahrens nach Anspruch 7 bis 10 zum Zugreifen auf Inhalt in einem ICN-Router (1) für informationszentriertes Networking nach einem der Ansprüche 1 bis 6.

12. Maschinenlesbares Medium, auf dem ein Computerprogrammprodukt nach Anspruch 11 gespeichert ist.

## Revendications

1. Routeur de mise en réseau centrée sur l'information (1), comprenant une première couche d'antémémoire (L1) et une deuxième couche d'antémémoire (L2), la première couche d'antémémoire (L1) comprenant une première mémoire de contenu (11) et la deuxième couche d'antémémoire (L2) comprenant une deuxième mémoire de contenu (21), la deuxième mémoire de contenu (21) ayant une capacité plus élevée mais une vitesse d'accès plus faible que la première mémoire de contenu (11), le routeur (1) étant configuré de telle façon que la première couche d'antémémoire (L1) soit capable de récupérer des données dans la deuxième couche d'antémémoire (L2) lorsqu'il est demandé au routeur (1) d'émettre lesdites données,
**caractérisé en ce que** la première mémoire de contenu (11) présente une première taille de bloc et **en ce que** la deuxième mémoire de contenu (21) présente une deuxième taille de bloc, la deuxième taille de bloc étant supérieure à la première taille de bloc, la première mémoire de contenu (11) comprenant une zone de permutation (110) au moyen de laquelle la première mémoire de contenu (11) est reliée à la deuxième mémoire de contenu (21), la zone de permutation (110) étant capable de fournir séquentiellement des blocs ayant la première taille de bloc en tant que parties des blocs récupérés avec la deuxième taille dans la deuxième mémoire de contenu (21), en réponse à la demande.

2. Routeur selon la revendication 1, dans lequel la première couche d'antémémoire (L1) comprend également une première mémoire d'index (12) qui indexe les blocs de la première mémoire de contenu (11), et la deuxième couche d'antémémoire (L2) comprend également une deuxième mémoire d'index (22) qui indexe les blocs de la deuxième mémoire de contenu (21).

3. Routeur selon la revendication 2, dans lequel la première mémoire de contenu (11) a une capacité plus élevée mais une vitesse d'accès plus faible que la première mémoire d'index (12), et la deuxième mémoire de contenu (21) a une capacité plus élevée mais une vitesse d'accès plus faible que la deuxième mémoire d'index (22).

4. Routeur selon l'une quelconque des revendications 1 à 3, comprenant également une troisième couche d'antémémoire (L3) comprenant une mémoire de masse (31) ayant une capacité plus élevée mais une vitesse d'accès plus faible que la deuxième mémoire de contenu (21), le routeur (1) étant configuré de telle façon que la deuxième couche d'antémémoire (L2) soit capable de récupérer des données dans la troisième couche d'antémémoire (L3) lorsqu'il est demandé au routeur (1) d'émettre lesdites données.

5. Routeur selon l'une quelconque des revendications 1 à 4, dans lequel la première mémoire de contenu (11) comprend également une zone de début de vidéo (111) dans laquelle est stocké au moins le premier bloc d'une pluralité de contenus stockés dans la deuxième mémoire de contenu (21).

6. Routeur selon la revendication 5, dans lequel les contenus dont au moins le premier bloc est stocké dans la zone de début de vidéo (111) sont les contenus de la deuxième mémoire de contenu (21) qui sont le plus susceptibles d'être demandés.

7. Procédé d'accès à un contenu au niveau d'un routeur de mise en réseau centrée sur l'information (1), comprenant les étapes consistant à :
(a) recevoir, au niveau du routeur (1), une demande concernant un contenu stocké au moins partiellement dans une deuxième mémoire de contenu (21) d'une deuxième couche d'antémémoire (L2) du routeur (1), la deuxième mémoire de contenu (21) présentant une deuxième taille de bloc ;
**caractérisé en ce qu'**il comprend également les étapes consistant à :
(b) au niveau d'une zone de permutation (110) d'une première mémoire de contenu (11) d'une première couche d'antémémoire (L1) du routeur (1), la première mémoire de contenu (11) présentant une première taille de bloc, récupérer des blocs, ayant la deuxième taille de bloc, des données dudit contenu demandé dans la deuxième mémoire de contenu (21) ;
(c) pour chaque bloc récupéré qui a été récupéré avec la deuxième taille de bloc, fournir séquentiellement, en réponse à la demande, des blocs ayant la première taille de bloc en tant que parties du bloc récupéré avec la deuxième taille de bloc.

8. Procédé selon la revendication 7, dans lequel l'étape (a) comprend également la recherche d'un premier bloc du contenu recherché dans une zone de début de vidéo (111) de la première mémoire de contenu (11).

9. Procédé selon la revendication 8, dans lequel au moins le premier bloc du contenu demandé est stocké dans la zone de début de vidéo (111), l'étape (b) comprenant simultanément le fait de fournir séquentiellement, en réponse à la demande, les blocs du contenu demandé qui sont stockés dans une zone de début de vidéo (111).

10. Procédé selon l'une quelconque des revendications 7 à 9, dans lequel le contenu demandé est une vidéo à jouer, comprenant une étape (d) consistant à, lorsque le routeur (1) reçoit une demande de mise en pause de la fourniture de la vidéo, fournir également séquentiellement au moins un bloc ayant la première taille de bloc, et lorsque le routeur (1) reçoit une demande de reprise de la fourniture de la vidéo, effectuer à nouveau les étapes (b) et (c) à partir du dernier bloc fourni.

11. Produit de programme d'ordinateur, contenant des instructions en code destinées à l'exécution d'un procédé selon les revendications 7 à 10 pour accéder à un contenu au niveau d'un routeur de mise en réseau centrée sur l'information, ICN, (1) selon l'une quelconque des revendications 1 à 6.

12. Support lisible par ordinateur, sur lequel est stocké un produit de programme d'ordinateur selon la revendication 11.
